# EUROPEAN PATENT APPLICATION

(11) **EP 2 372 711 A1**
(43) Date of publication of application: **05.10.2011**
(21) Application number: 11160611.7
(22) Date of filing: 31.03.2011
(51) Int. Cl.: G11B 19/02, G11B 27/10, H04N 5/76, G11B 20/10

(54) **Video playback apparatus and resume playback method**

(30) Priority: 01.04.2010 JP 2010084969
(71) Applicant: Alpine Electronics, Inc., Tokyo (JP)
(72) Inventor: Hayashi, Shuhei, Fukushima, Fukushima (JP)
(74) Representative: Klunker . Schmitt-Nilson . Hirsch

(57) **Abstract**

In response to a power-off operation occurring during playback of a BD-J Title, data of a resume Movie Object is created and stored for playing an AV data interval between a current playback position of the AV data and a position that is a predetermined time after the current playback position. If a video playback apparatus is turned on again thereafter, the resume Movie Object is played based on the stored data of the resume Movie Object and then playback and output of the BD-J Title having been ready to be played during playback of the resume Movie Object are started from the end position of the AV data interval.

## Description

### BACKGROUND OF THE INVENTION

### 1. Field of the Invention

The present invention relates to a resume playback technique in video playback apparatuses.

### 2. Description of the Related Art

As video playback apparatuses, those for playing "Blu-ray Discs (BDs)" storing "high definition movie (HDMV) Titles" and "Blu-ray Disc Java (BD-J) Titles" are known (for example, see Domestic Re-publication of PCT International Publication for Patent Application No. 2005/036547). Playback of the HDMV Titles is controlled based on commands by a navigation command program, whereas playback of the BD-J Titles is controlled by execution of a BD-J application.

As resume playback techniques for allowing such video playback apparatuses for playing BDs to start playback from an end position of the last playback of an HDMV Title, a function for storing information on a status set at the time of termination of playback of the HDMV Title and then performing resume playback based on the stored status information is known.

Additionally, following resume playback techniques are known as techniques for allowing such video playback apparatuses for playing BDs to perform resume playback of a BD-J Title. More specifically, in one technique, information on a status set at the time of termination of playback is stored and a playback status of the BD-J Title is restored to the one set at the time of termination of playback based on the stored status information (for example, see Japanese Unexamined Patent Application Publication No. 2009-193642). In another technique, an operation history entered for the BD-J Title is stored and operations are reentered as the operation history stored for the BD-J Title indicates, whereby the playback status of the BD-J Title is restored to the one set at the time of termination of playback (see, for example, Japanese Unexamined Patent Application Publication No. 2009-259356).

### SUMMARY OF THE INVENTION

As described above, because playback of BD-J Titles is controlled by execution of a BD-J application, outputting of a playback result to users does not start until activation and initial setting of the BD-J application completes.

However, the activation and initial setting of the BD-J application may take relatively long time.

Thus, the foregoing resume playback techniques for restoring a playback status of a BD-J Title to one set at the time of termination of playback may keep users waiting for a long time before outputting of a playback result starts.

Accordingly, it is an object of the present invention to allow video playback apparatuses for playing BDs to quickly start outputting a playback result at the time of resume playback of BD-J Titles.

To achieve the object, a video playback apparatus for playing a Blu-ray Disc includes: an HDMV module configured to control playback of AV data of an HDMV Title defined on the Blu-ray Disc in accordance with a Movie Object of the HDMV Title; a BD-J module configured to control playback of AV data of a BD-J Title recorded on the Blu-ray Disc in accordance with a BD-J Object of the BD-J Title; a resume information creator; and a resume playback controller. The resume information creator is configured to create and store data of a resume Movie Object of the currently played BD-J Title in response to power-off of the video playback apparatus occurring during playback of AV data of a BD-J Title. The currently played BD-J Title serves as a resume-target BD-J Title. The data of the resume Movie Object defines a Movie Object for playing a first resume playback interval between a current playback position of the AV data of the resume-target BD-J Title and a position corresponding to playback elapsed time that is a predetermined time after the current playback position. The resume playback controller is configured to cause, on condition that the same Blu-ray Disc is mounted in the video playback apparatus at the time of the last power-off and at the time of power-on of the video playback apparatus, the HDMV module to perform playback of the first resume playback interval of the AV data in accordance with the Movie Object defined by the stored data of the resume Movie Object and also the BD-J module to prepare for starting playback of the AV data of the resume-target BD-J Title from an end position of the first resume playback interval. The resume playback controller is also configured to cause, once the HDMV module has completed playback of the first resume playback interval of the AV data, the BD-J module to start playback of the AV data of the resume-target BD-J Title from the end position of the first resume playback interval.

In the foregoing video playback apparatus, the data of the resume Movie Object may include a Movie Object, a Movie PlayList, and Clip Information. The Movie PlayList and the Clip Information may be defined so that playback of a PlayItem associated by the Clip Information with the first resume playback interval of the AV data of the resume-target BD-J Title is launched by playback of the Movie PlayList. The Movie Object may be defined to control playback of the Movie PlayList.

In the foregoing video playback apparatus, the resume playback controller may cause, on condition that the same Blu-ray Disc is mounted in the video playback apparatus at the time of the last power-off and at the time of power-on of the video playback apparatus, the HDMV module to perform playback of the first resume playback interval of the AV data in accordance with the Movie Object defined by the stored data of the resume Movie Object and also the BD-J module to prepare for starting playback of the AV data of the resume-target BD-J Title. The resume playback controller may also cause, once the BD-J module has completed the preparation for starting playback, the HDMV module to terminate playback of the first resume playback interval of the AV data and also the BD-J module to start playback of the AV data of the resume-target BD-J Title from an end position of playback by the HDMV module.

In the foregoing video playback apparatus, the data of the resume Movie Object may include a Movie Object, a Movie PlayList, and Clip Information. The Movie PlayList and the Clip Information may be defined so that playback of a PlayItem associated by the Clip Information with the first resume playback interval of the AV data of the resume-target BD-J Title is launched by playback of the Movie PlayList. The Movie Object may be defined to control playback of the Movie PlayList.

Such a video playback apparatus for playing a Blu-ray Disc performs, based on the Movie Object defined by the data of the resume Movie Object, playback the AV data from the position of the resume-target BD-J Title being played at the time of power-off for a short period at the time of power-on. The video playback apparatus then starts, based on the BD-J Object, playback of AV data of the resume-target BD-J Title behind the playback end position of the Movie Object defined by the data of the resume Movie Object. In this way, resume playback of the BD-J Title being played at the time of occurrence of the power-off operation is realized.

Since outputting of a result of playback based on the Movie Object defined by the data of the resume Movie Object can be started in a shorter time than that based the BD-J Object of the BD-J Title, playback of which is controlled with a BD-J application, such a video playback apparatus can start outputting a resume playback result more quickly after power-on.

As described above, an embodiment of the present invention allows a video playback apparatuses for playing BDs to quickly start outputting a playback result at the time of resume playback of BD-J Titles.

### BRIEF DESCRIPTION OF THE DRAWINGS

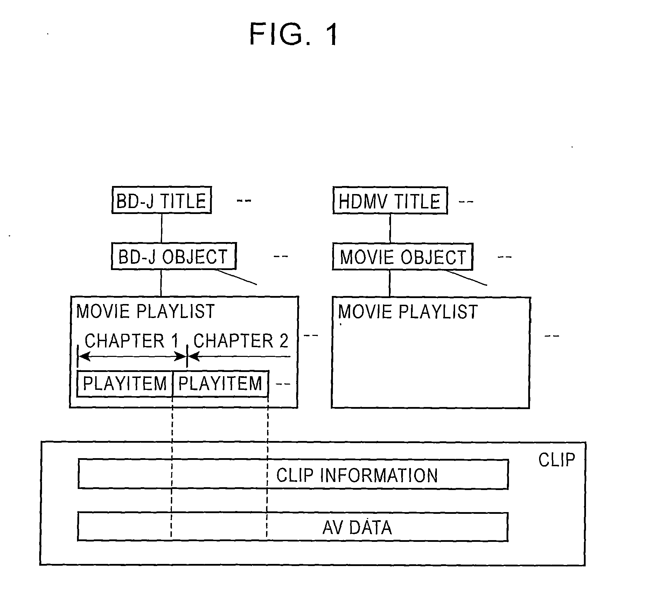

Fig. 1 is a diagram illustrating a data structure of a BD;
Fig. 2 is a block diagram illustrating a configuration of a video playback apparatus according to an embodiment of the present invention;
Fig. 3 is a flowchart illustrating resume information storage processing according to an embodiment of the present invention;
Fig. 4 is a flowchart illustrating resume processing according to an embodiment of the present invention;
Fig. 5 is a diagram illustrating an example of a resume operation according to an embodiment of the present invention; and
Fig. 6 is a diagram illustrating an example of a resume operation according to an embodiment of the present invention.

### DESCRIPTION OF THE PREFERRED EMBODIMENTS

Embodiments of the present invention will be described below.

A description will now be given for a data structure of a Blu-ray Disc (BD) and a playback operation of a title based on the data structure.

A BD can include titles, such as "BD-J Titles" and "HDMV Titles". An entity of a BD-J Title is a "BD-J Object", whereas an entity of an HDMV Title is a "Movie Object".

The BD-J Object is constituted by a BD-J application, whereas Movie Object includes a navigation command program. When performing playback of a title, a video playback apparatus executes the BD-J application of the BD-J Object serving as the entity of the title or executes the navigation command program of the Movie Object serving as the entity of the title.

The video playback apparatus controls playback of a "Movie PlayList" in accordance with the BD-J application of the BD-J Object or the navigation command program of the Movie Object.

The Movie PlayList defines a playback sequence of "PlayItems". Each of the PlayItems is associated by "Clip Information" with a data interval of AV stream data, which is constituted as a file, i.e., a "Clip AV stream file". The Clip Information and AV data of the Clip AV stream file are collectively referred to as a "Clip".

When performing playback of a Movie PlayList, the video playback apparatus plays the PlayItems in accordance with the playback sequence defined in the Movie PlayList. During playback of each PlayItem, a playback result of an AV data interval associated with the PlayItem by Clip Information is output.

A given interval can be defined as a "Chapter" in the Movie PlayList.

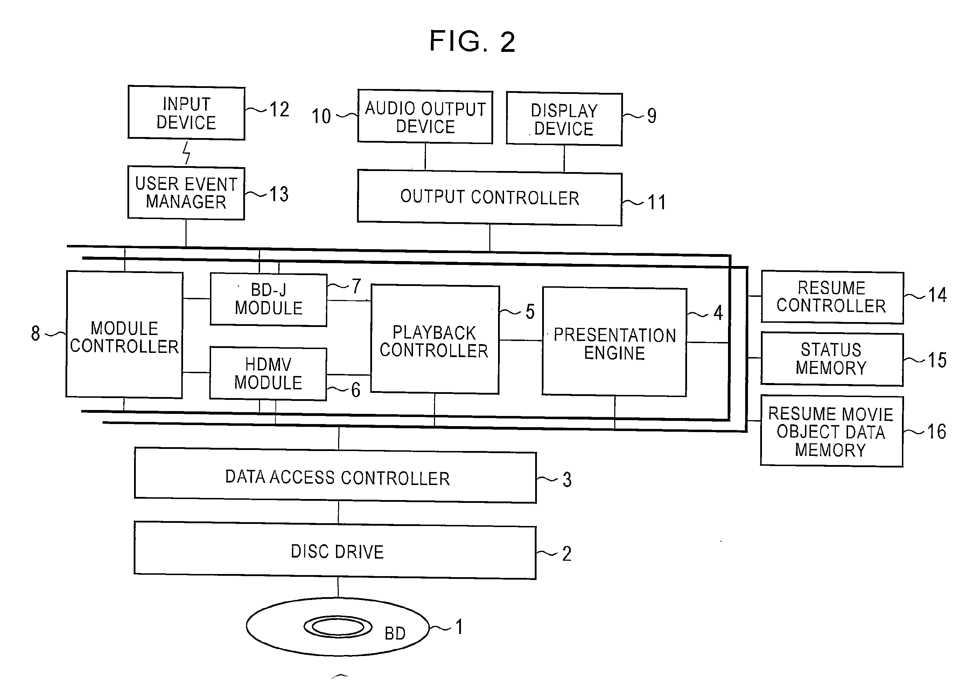

Fig. 2 illustrates a configuration of a video playback apparatus according to an embodiment.

As illustrated, the video playback apparatus includes a disc drive 2 for accessing a BD 1, a data access controller 3 for controlling reading of data from the BD 1 through the disc drive 2 and for caching data, and a presentation engine 4 for performing playback of audio visual (AV) data read out from the BD 1.

The video playback apparatus also includes a playback controller 5 for causing the presentation engine 4 to perform playback of a Movie PlayList. More specifically, the playback controller 5 causes the presentation engine 4 to perform playback of an AV data interval associated with each PlayItem by Clip Information in accordance with the playback sequence of the PlayItems defined in the Movie PlayList.

Additionally, the video playback apparatus includes an HDMV module 6, a BD-J module 7, a module controller 8, an output controller 11, an input device 12, a user event manager 13, a resume controller 14, a status memory 15, and a resume movie object data memory 16. The HDMV module 6 controls playback of HDMV Titles recorded on the BD 1. The BD-J module 7 controls playback of BD-J Titles recorded on the BD 1. The module controller 8 controls the HDMV module 6 and the BD-J module 7 to switch playback-target titles. The output controller 11 controls outputting of AV data reproduced by the presentation engine 4, AV data output by the BD-J module 7 in accordance with the BD-J application, and AV data for a graphical user interface (GUI) output by other units to a display device 9, such as a liquid crystal display (LCD), and an audio output device 10, such as a speaker. The input device 12 includes various keys and serves as a remote control. The user event manager 13 issues, to each unit, an event corresponding to a key operation on the input device 12.

Such a video playback apparatus performs playback of a title in a following manner.

When an HDMV Title is subjected to playback, the module controller 8 notifies the HDMV module 6 of a Movie Object of the HDMV Title. The HDMV module 6 starts playback of the notified Movie Object. In the playback of the Movie Object, the HDMV module 6 causes the playback controller 5 to perform playback of the Movie PlayList in accordance with a navigation command program of the Movie Object. When a BD-J Title is subjected to playback, the module controller 8 notifies the BD-J module 7 of a BD-J Object of the BD-J Title. The BD-J module 7 then starts playback of the notified BD-J Object. In the playback of the BD-J Object, the BD-J module 7 executes a BD-J application of the BD-J Object to cause the playback controller 5 to perform playback of a Movie PlayList in accordance with the BD-J application.

The foregoing video playback apparatus may be realized with a computer having a general hardware configuration, such as a microprocessor, a memory, and other peripheral devices. In this case, each of or some of the data access controller 3, the presentation engine 4, the playback controller 5, the HDMV module 6, the BD-J module 7, the module controller 8, the output controller 11, the user event manager 13, the resume controller 14, the status memory 15, and the resume movie object data memory 16 may be a resource or a process realized by the computer executing a predetermined computer program.

An operation for resuming a BD-J Title in such a video playback apparatus will be described below.

A description will be first given for processing for storing resume information executed by the resume controller 14.

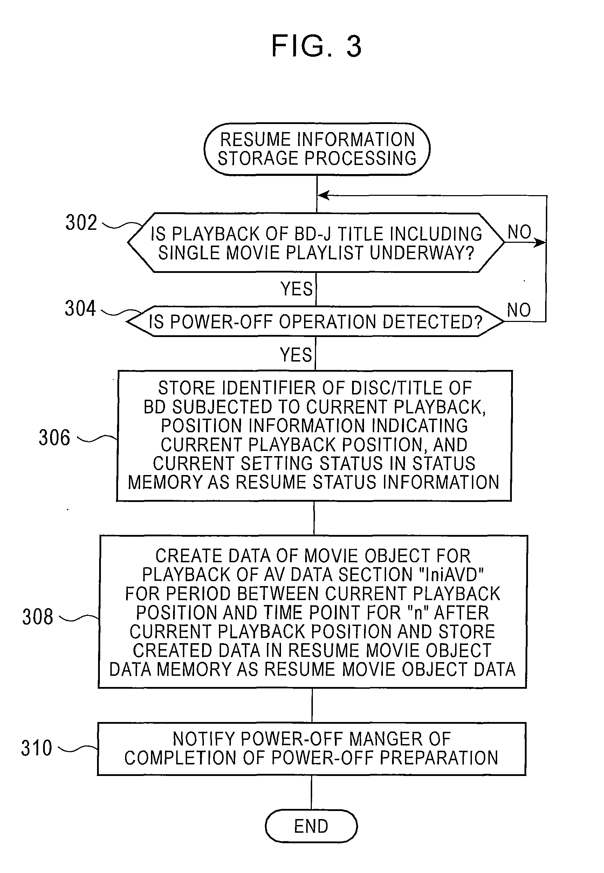

Fig. 3 illustrates a procedure of the resume information storage processing.

As illustrated, during playback of a BD-J Title including a single Movie PlayList (STEP 302), the resume controller 14 monitors whether a power-off operation occurs in the video playback apparatus (STEP 304). A power-off manger, not illustrated in Fig. 2, notifies the resume controller 14 of occurrence of the power-off operation. The power-off manager controls power-off of the video playback apparatus. In response to a user power-off operation, the power-off manager notifies each unit of occurrence of the power-off operation. The power-off manager then turns off the video playback apparatus after receiving from each unit a notification on completion of power-off preparation. The video playback apparatus is turned on in response to a user power-on operation.

If the power-off operation occurs during playback of the BD-J Title including the single Movie PlayList (YES in STEP 304), the resume controller 14 stores resume status information in the status memory 15 (STEP 306). The resume status information includes a disc identifier of the currently played BD, an identifier of a currently played title, position information indicating a current playback position (such as an identifier of a currently played Chapter and elapsed time representing a current playback time position in the currently played Movie PlayList), and a current audio and subtitle setting status.

The resume controller 14 creates data of a Movie Object for resume (hereinafter, referred to as data of a resume Movie Object) defining a Movie Object for playing an AV data interval "IniAVD" between the current playback position and a time position "n" minutes (e.g., three minutes) after the current playback position in the currently played title.

The resume controller 14 then stores the created data of the resume Movie Object in the resume movie object data memory 16 (STEP 308). The AV data interval IniAVD may be determined as a data interval of the currently played AV data (i.e., AV data of a Clip AV stream file to which the currently played AV data belongs) between a data address corresponding to the current playback position and a data address corresponding to a time position "n" minutes after the current playback position. Alternatively, the AV data interval IniAVD may be determined by analyzing the BD-J application, the Movie PlayList, and the Clip Information of the currently played BD-J Object and determining a data interval supposed to be played during following "n" minutes if neither the power-off operation nor a new user operation occurred.

A Movie Object, a Movie PlayList, and Clip Information are created as the data of the resume Movie Object. Regarding the Movie PlayList and the Clip Information, playback of the Movie PlayList launches playback of a PlayItem associated with the data interval IniAVD by the Clip Information. The Movie Object controls playback of the Movie PlayList so that playback of the Movie PlayList automatically starts after playback of the Movie Object starts.

The resume controller 14 then notifies the power-off manager of completion of the power-off preparation (STEP 310) before terminating the processing.

Resume processing performed by the resume controller 14 will now be described.

Execution of the resume processing starts immediately after the video playback apparatus is turned on.

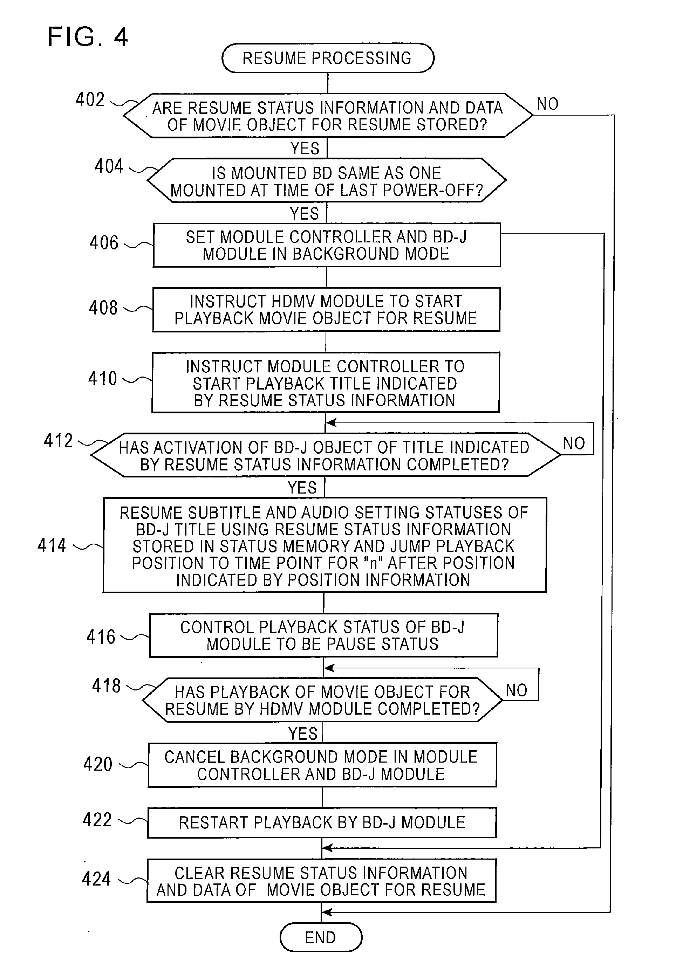

Fig. 4 illustrates a procedure of the resume processing.

As illustrated, in this resume processing, the resume controller 14 determines whether the resume status information is stored in the status memory 15 and the data of the resume Movie Object is stored in the resume movie object data memory 16 (STEP 402). If the resume status information and the data of the resume Movie Object are not stored, the resume controller 14 terminates the processing.

If the resume status information and the data of the resume Movie Object are stored (YES in STEP 402), the resume controller 14 determines whether the BD 1 currently mounted in the video playback apparatus is the same as the one mounted in the video playback apparatus at the time of the last power-off by comparing a disc identifier of the BD 1 stored as the resume status information with a disc identifier of the BD 1 currently mounted in the video playback apparatus (STEP 404). If the BD1 is not the same, the resume controller 14 clears the resume status information in the status memory 15 and the data of the resume Movie Object in the resume movie object data memory 16 (STEP 424) before terminating the processing.

If the BD 1 currently mounted in the video playback apparatus is the same as the one mounted in the video playback apparatus at the time of the last power-off (YES in STEP 404), the resume controller 14 sets the module controller 8 and the BD-J module 7 in a background mode (STEP 406). The module controller 8 and the BD-J module 7 set in the background mode perform processing thereof while suppressing output of AV data to the output controller 11, i.e., output of the AV data to the display device 9 and the audio output device 10.

The resume controller 14 then causes the HDMV module 6 to start playback of the resume Movie Object using the data of the resume Movie Object stored in the resume movie object data memory 16 and the AV data recorded on the BD 1 (STEP 408).

The resume controller 14 then instructs the module controller 8 to start playback of a BD-J Title, i.e., a title that the identifier stored in the status memory 15 indicates (STEP 410). The module controller 8 having received the playback start instruction notifies the BD-J module 7 of a BD-J Object of the BD-J Title indicated by the playback start instruction. The BD-J module 7 starts playback of the notified BD-J Object. As described above, in playback of the BD-J Object, the BD-J module 7 executes activation and initial setting of a BD-J application of the BD-J Object and then causes the playback controller 5 to perform playback of a Movie PlayList in accordance with the BD-J application.

The resume controller 14 stands by until playback of the Movie PlayList starts after the BD-J module 7 has completed the activation of the BD-J Object, i.e., the activation and the initial setting of the BD-J application (STEP 412). The resume controller 14 then restores the audio and subtitle setting status of the currently played BD-J Title to the one indicated by the resume status information and jumps the playback position of the BD-J Title to a time position "n" minutes after the playback position indicated by the position information of the resume status information (STEP 414).

The resume controller 14 can jump the position utilizing an event, such as a Chapter Search or a Time Search, issued by the user event manager 13 to jump the playback position of the title. More specifically, the resume controller 14 can perform this jumping operation by causing the user event manager 13 to issue an event for jumping the playback position of the BD-J Title to a time position "n" minutes after the playback time position indicated by the position information based on the identifier of the Chapter and elapsed time representing the playback time position in the Movie PlayList indicated by the position information of the resume status information.

The resume controller 14 then controls the BD-J module 7 to pause the playback (STEP 416) and waits for the HDMV module 6 to complete playback of the resume Movie Object (STEP 418).

If playback of the resume Movie Object completes (YES in STEP 418), the resume controller 14 cancels the background mode in the module controller 8 and the BD-J module 7 (STEP 420) and also cancels the pause status in the BD-J module 7 to allow the BD-J module 7 to restart playback of the BD-J Object (STEP 422). After the background mode is canceled and the playback is restarted, the BD-J module 7 performs playback of the BD-J Object of the BD-J Title from the position jumped in STEP 414 and outputs the AV data resulting from playback to the display device 9 and the audio output device 10 through the output controller 11.

The resume controller 14 then clears the resume status information in the status memory 15 and the data of the resume Movie Object in the resume movie object data memory 16 (STEP 424) before terminating the processing.

The resume processing performed by the resume controller 14 has been described above.

Operation examples in the above-described resume information storage processing and resume processing will now be described.

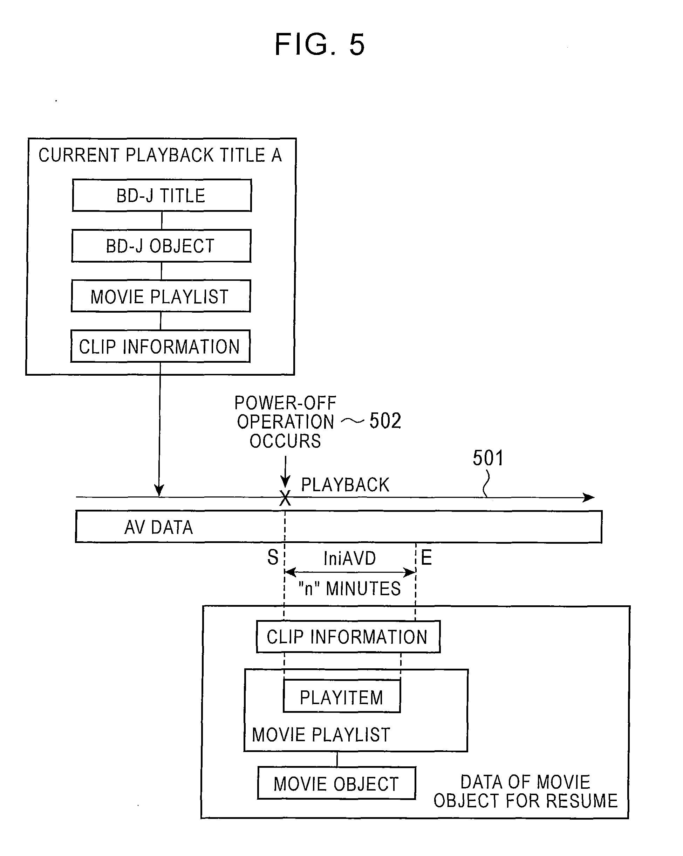

If a power-off operation 502 occurs during playback of a BD-J Title "TITLE A" launching playback of AV data as illustrated by an arrow 501 in Fig. 5, data of a resume Movie Object for an AV data interval IniAVD between a position S of the AV data being played at that time and a position E "n" minutes after the position S is created and then stored in the resume movie object data memory 16 in the resume information storage processing. Additionally, a disc identifier of the currently played BD 1, an identifier of the currently played TITLE A, and position information indicating the current playback position, and a current audio and subtitle setting status are stored in the status memory 15 as the resume status information.

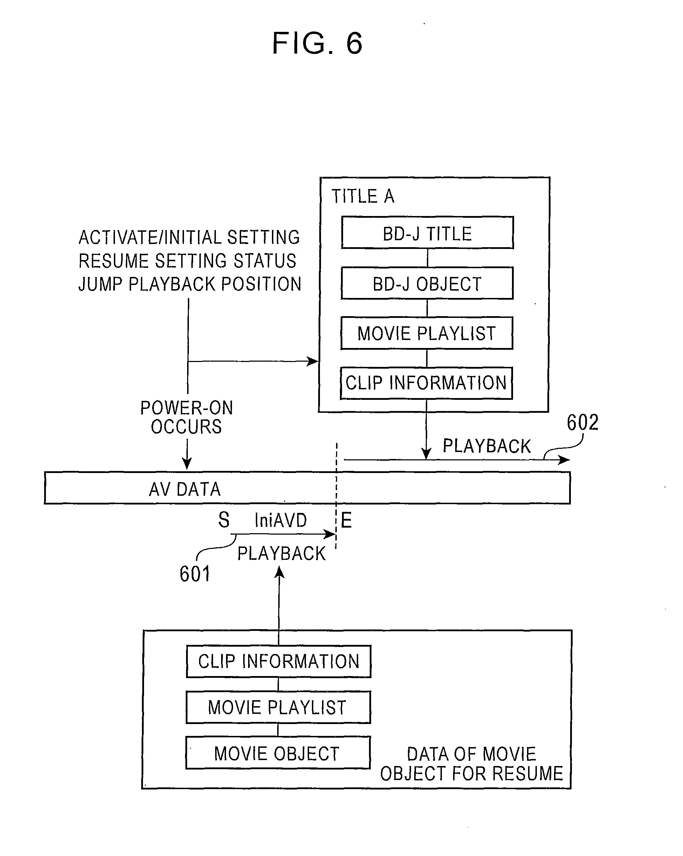

If the video playback apparatus is turned on without the BD 1 being changed after power-off of the video playback apparatus, the resume Movie Object is first played based on the data of the resume Movie Object stored in the resume movie object data memory 16 in the resume processing as illustrated in Fig. 6. In this way, the data interval IniAVD between the position S and the position E of the AV data illustrated in Fig. 5 is played and output for "n" minutes as illustrated by an arrow 601 in Fig. 6.

Activation and initial setting of the BD-J Object of the BD-J Title "TITLE A" are performed in background while the data interval IniAVD between the position S and the position E of this AV data is played for "n" minutes. Thereafter, the playback position of the AV data of the BD-J Object is jumped to the position E of the AV data.

Once playback of the resume Movie Object completes, playback and output of the BD-J Title "TITLE A" restarts from the end position E of the AV data interval IniAVD as illustrated by an arrow 602.

As a result, when the video playback apparatus is turned on again, playback and output of AV data are continuously performed from the position S that is being played at the time of occurrence of the power-off operation.

Since playback and output of the resume Movie Object, i.e., a Movie Object, can be started in a shorter time than a BD-J Object of a BD-J Title, playback of which is controlled with a BD-J application, playback and output based on resume playback can be restarted more quickly from the position being played at the time of occurrence of the power-off operation.

The embodiments of the present invention have been described above.

A resume operation performed when a power-off operation occurs during playback of a BD-J Title including a single Movie PlayList has been described above. However, the resume operation according to the embodiment can be applied to a case where the power-off operation occurs during playback of a BD-J Title including a plurality of Movie PlayLists.

More specifically, in this case, a history of operations entered for the BD-J Title during playback of the BD-J Title is stored in the status memory 15 as the resume status information in the resume information storage processing. In the resume processing, operations indicated by the operation history stored for the BD-J Title are reentered in STEP 414 after activation of the BD-J Title having been played at the time of occurrence of the power-off operation. The playback position is then jumped to a time position "n" minutes after the playback position by causing the user event manger 13 to issue an appropriate event.

In the resume processing according to the embodiment illustrated in Fig. 4, following processing may be performed after the resume controller 14 detects that the BD-J module 7 has completed activation of the BD-J Object of the BD-J Title indicated by the identifier stored in the status memory 15, i.e., after the resume controller 14 detects that playback of a Movie PlayList has started after completion of activation and initial setting of the BD-J application in STEP 412.

More specifically, once the activation of the BD-J Object completes, the resume controller 14 restores the audio and subtitle setting status of the currently played BD-J Title back to the one indicated by the resume status information. The resume controller 14 then terminates playback of the resume Movie Object performed by the HDMV module 6. The resume controller 14 jumps the playback position of the BD-J Title from the playback position indicated by the position information of the resume status information to a time position corresponding to a period for which the HDMV module 6 has continued playback of the AV data of the resume Movie Object by the HDMV module 6 before terminating the playback. The resume controller 14 also cancels the background mode in the module controller 8 and the BD-J module 7. The resume controller 14 then clears the resume status information in the status memory 15 and the data of the resume Movie Object in the resume movie object data memory 16.

In this way, playback of the AV data of the BD-J Object of the BD-J Title indicated by the identifier stored in the status memory can be quickly resumed once activation of the BD-J Object has completed.

## Claims

1. A video playback apparatus for playing a Blu-ray Disc, the video playback apparatus comprising:
an HDMV module configured to control playback of AV data of an HDMV Title defined on the Blu-ray Disc in accordance with a Movie Object of the HDMV Title;
a BD-J module configured to control playback of AV data of a BD-J Title recorded on the Blu-ray Disc in accordance with a BD-J Object of the BD-J Title;
a resume information creator configured to create and store data of a resume Movie Object of the currently played BD-J Title in response to power-off of the video playback apparatus occurring during playback of AV data of a BD-J Title, the currently played BD-J Title serving as a resume-target BD-J Title, the data of the resume Movie Object defining a Movie Object for playing a first resume playback interval between a current playback position of the AV data of the resume-target BD-J Title and a position corresponding to playback elapsed time that is a predetermined time after the current playback position; and
a resume playback controller configured to cause, on condition that the same Blu-ray Disc is mounted in the video playback apparatus at the time of the last power-off and at the time of power-on of the video playback apparatus, the HDMV module to perform playback of the first resume playback interval of the AV data in accordance with the Movie Object defined by the stored data of the resume Movie Object and also the BD-J module to prepare for starting playback of the AV data of the resume-target BD-J Title from an end position of the first resume playback interval, the resume playback controller being configured to cause, once the HDMV module has completed playback of the first resume playback interval of the AV data, the BD-J module to start playback of the AV data of the resume-target BD-J Title from the end position of the first resume playback interval.

2. The video playback apparatus according to Claim 1,
wherein
the data of the resume Movie Object includes a Movie Object, a Movie PlayList, and Clip Information, and wherein
the Movie PlayList and the Clip Information are defined so that playback of a PlayItem associated by the Clip Information with the first resume playback interval of the AV data of the resume-target BD-J Title is launched by playback of the Movie PlayList, and wherein
the Movie Object is defined to control playback of the Movie PlayList.

3. The video playback apparatus according to Claim 1,
wherein
the resume playback controller causes, on condition that the same Blu-ray Disc is mounted in the video playback apparatus at the time of the last power-off and at the time of power-on of the video playback apparatus, the HDMV module to perform playback of the first resume playback interval of the AV data in accordance with the Movie Object defined by the stored data of the resume Movie Object and also the BD-J module to prepare for starting playback of the AV data of the resume-target BD-J Title, and the resume playback controller causes, once the BD-J module has completed the preparation for starting playback, the HDMV module to terminate playback of the first resume playback interval of the AV data and also the BD-J module to start playback of the AV data of the resume-target BD-J Title from an end position of playback by the HDMV module.

4. The video playback apparatus according to Claim 3,
wherein
the data of the resume Movie Object includes a Movie Object, a Movie PlayList, and Clip Information, and wherein
the Movie PlayList and the Clip Information are defined so that playback of a PlayItem associated by the Clip Information with the first resume playback interval of the AV data of the resume-target BD-J Title is launched by playback of the Movie PlayList, and wherein
the Movie Object is defined to control playback of the Movie PlayList.

5. A resume playback method allowing a video playback apparatus for playing a Blu-ray Disc to perform resume playback, the video playback apparatus including an HDMV module configured to control playback of AV data of an HDMV Title defined on the Blu-ray Disc in accordance with a Movie Object of the HDMV Title and a BD-J module configured to control playback of AV data of a BD-J Title recorded on the Blu-ray Disc in accordance with a BD-J Object of the BD-J Title, the resume playback method comprising the steps of:
creating and storing data of a resume Movie Object of the currently played BD-J Title in response to power-off of the video playback apparatus occurring during playback of AV data of a BD-J Title, the currently played BD-J Title serving as a resume-target BD-J Title, the data of the resume Movie Object defining a Movie Object for playing a first resume playback interval between a current playback position of the AV data of the resume-target BD-J Title and a position corresponding to playback elapsed time that is a predetermined time after the current playback position; and
causing, on condition that the same Blu-ray Disc is mounted in the video playback apparatus at the time of the last power-off and at the time of power-on of the video playback apparatus, the HDMV module to perform playback of the first resume playback interval of the AV data in accordance with the Movie Object defined by the stored data of the resume Movie Object and also the BD-J module to prepare for starting playback of the AV data of the resume-target BD-J Title from an end position of the first resume playback interval, and causing, once the HDMV module has completed playback of the first resume playback interval of the AV data, the BD-J module to start playback of the AV data of the resume-target BD-J Title from the end position of the first resume playback interval; or
causing, on condition that the same Blu-ray Disc is mounted in the video playback apparatus at the time of the last power-off and at the time of power-on of the video playback apparatus, the HDMV module to perform playback of the first resume playback interval of the AV data in accordance with the Movie Object defined by the stored data of the resume Movie Object and also the BD-J module to prepare for starting playback of the AV data of the resume-target BD-J Title, and causing, once the BD-J module has completed the preparation for starting playback, the HDMV module to terminate playback of the first resume playback interval of the AV data and also the BD-J module to start playback of the AV data of the resume-target BD-J Title from an end position of playback by the HDMV module.
